# EUROPÄISCHE PATENTSCHRIFT

(11) **EP 3 953 212 B1**
(45) Veröffentlichungstag und Bekanntmachung des Hinweises auf die Patenterteilung: **28.12.2022**
(21) Anmeldenummer: 20710884.6
(22) Anmeldetag: 09.03.2020
(51) Int. Cl.: B60H 1/00, B64D 13/00, B60N 2/56, B60N 2/24, B61D 27/00, B61D 33/00

(54) **KLIMATISIERUNGSANORDNUNG FÜR EIN FAHRZEUG UND FAHRZEUG**
AIR-CONDITIONING ARRANGEMENT FOR A VEHICLE, AND VEHICLE
SYSTÈME DE CLIMATISATION POUR VÉHICULE ET VÉHICULE

(30) Priorität: 08.04.2019 DE 102019204958
(43) Veröffentlichungstag der Anmeldung: 16.02.2022
(73) Patentinhaber: Audi AG, 85045 Ingolstadt (DE)
(72) Erfinder: MICHAEL, Jörg, 85055 Ingolstadt (DE); GUYOT, Bastian, 85080 Gaimersheim (DE); ALBL, Sebastian, 85080 Gaimersheim (DE)
(86) Internationale Anmeldenummer: PCT/EP2020/056151
(87) Internationale Veröffentlichungsnummer: WO 2020/207678

(56) Entgegenhaltungen:
- DE-A1-102006 041 030
- DE-A1-102015 210 624
- US-A- 1 750 873

## Beschreibung

Die Erfindung betrifft eine Klimatisierungsanordnung für ein Fahrzeug. Des Weiteren betrifft die Erfindung ein Fahrzeug mit einer solchen Klimatisierungsanordnung.

Klimatisierungsanordnungen für Fahrzeuge sind in zahlreichen Variationen bekannt. Heutige Fahrzeuge sind in drei oder vier Klimatisierungszonen eingeteilt, welche von der Lüftungsvorrichtung mit temperierter Luft versorgt werden. In der Regel umfassen solche Lüftungsvorrichtungen mindestens einen in einer Instrumententafel angeordneten Luftkanal, mit welchem mindestens ein Luftausströmer fluidisch verbunden ist. Bei Fahrzeugen mit autonomen oder teilautonomen Fahrfunktionen können insbesondere die Fahrzeugsitze im Frontbereich sehr weit nach hinten verstellt werden. Dadurch ist eine effiziente Anströmung und Temperierung der Insassen auf diesen Fahrzeugsitzen durch Luftströme schwierig, welche aus an der Instrumententafel angeordneten Luftausströmern ausströmen. Insbesondere, wenn die Insassen die Fahrzeugsitze in eine Komfortstellung verstellt haben.

Aus der DE 10 2016 112 991 A1 ist ein System zur Zufuhr klimatisierter Luft an einen Fahrzeugsitz bekannt, welches eine Quelle zur Erzeugung und/oder Lieferung klimatisierter Luft und eine statische Tragstruktur umfasst. An der statischen Tragstruktur ist der Fahrzeugsitz befestigt. Der Fahrzeugsitz umfasst eine Außenfläche und eine Luftverteilungskammer, welche miteinander in fluidischer Verbindung stehen. Eine Sitzverstellung ist zwischen dem Sitz und der statischen tragenden Struktur angeordnet und stellt eine Wirkverbindung zwischen diesen her. Mithilfe der Sitzverstellung kann der Sitz in mehrere Positionen verschoben werden. Ein einstellbarer Kanal umfasst einen festen Kanalabschnitt und einen beweglichen Kanalabschnitt, wobei der bewegliche Kanalabschnitt beim Verschieben des Sitzes zwischen den mehreren Positionen relativ zum festen Kanalabschnitt verschiebbar ist. Der einstellbare Kanal überführt die Luft von der Quelle zur Erzeugung der klimatisierten Luft zu der Luftverteilungskammer.

Aus der DE 10 2007 042 055 A1 ist eine Verbindungsvorrichtung zur Verbindung zwischen zwei relativ in ihrer Position veränderbaren Luftkanälen bekannt, wobei die Verbindungsvorrichtung eine Veränderung der Position der Luftkanäle zueinander in zwei parallelen Ebenen ermöglicht und ein Verbindungskanal zwischen den beiden Luftkanälen vorgesehen ist, welcher zumindest einen ersten Bereich aufweist, welcher eine Rotationsbewegung zweier benachbarter und gegeneinander abgedichteter Bereiche relativ zueinander vorsieht, und zumindest einen zweiten, getrennt vom ersten Bereich ausgebildeten Bereich aufweist, welcher eine translatorische Bewegung zweier benachbarter und gegeneinander abgedichteter Bereiche relativ zueinander vorsieht.

Aus der DE 2006 041 030 A1 ist ein Klimatisierungssystem für eine Luftfahrzeugkabine bekannt, welches zumindest einen Wärmetauscher umfasst, dem in einem Kühlkreislauf eines Kühlsystems zirkulierendes Kühlmittel und Luft zugeführt werden. Das Kühlmittel kühlt im Wärmetauscher die zugeführte Luft, und die aus dem Wärmetauscher austretende Luft tritt in die Luftfahrzeugkabine ein. Das Kühlmittel des Kühlsystems befindet sich in dem Kühlkreislauf ständig im flüssigen Zustand. Das flüssige Kühlmittel kann auch einen Luftfahrzeugsitz oder einen Sitzbereich des Luftfahrzeugsitzes kühlen.

Aus der US 1,750, 873 A ist ein Fahrzeug mit einem Belüftungssystem bekannt, welches in einem Unterflur des Fahrzeugs angeordnete Fluidkanäle umfasst.

Aus der DE 10 2015 210 624 A1 ist ein Schienenfahrzeug mit einer gattungsgemäßen Klimatisierungsanordnung bekannt. Die Klimatisierungsanordnung umfasst mindestens einen Fluidkanal, welcher mindestens zwei baugleiche Anschlussvorrichtungen aufweist, und mindestens einen verschiebbaren Fahrzeugsitz, wobei in dem mindestens einen Fahrzeugsitz eine Klimatisierungskomponente zur Erzeugung eines ausgebbaren temperierten Luftstroms angeordnet ist. Die Klimatisierungskomponente des mindestens einen Fahrzeugsitzes ist über einen beweglichen Fluidanschluss, welcher zur Herstellung einer fluiddichten Verbindung als Gegenstück zu den Anschlussvorrichtungen des mindestens einen Fluidkanals ausgebildet ist, wahlweise an eine der Anschlussvorrichtungen des mindestens einen Fluidkanals ankoppelbar und abkoppelbar.

Der Erfindung liegt die Aufgabe zu Grunde, eine Klimatisierungsanordnung für ein Fahrzeug sowie ein Fahrzeug mit einer solchen Klimatisierungsanordnung bereitzustellen, welche unabhängig von einer Position eines korrespondierenden Fahrzeugsitzes eine effiziente Anströmung und Temperierung eines Insassen ermöglicht.

Diese Aufgabe wird durch eine Klimatisierungsanordnung für ein Fahrzeug mit den Merkmalen des Patentanspruchs 1 und durch ein Fahrzeug mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Um eine Klimatisierungsanordnung für ein Fahrzeug bereitzustellen, welche unabhängig von einer Position eines korrespondierenden Fahrzeugsitzes eine effiziente Anströmung und Temperierung eines Insassen ermöglicht, ist mindestens ein Fluidkanal, welcher mindestens zwei baugleiche Anschlussvorrichtungen aufweist, und mindestens ein verschiebbarer Fahrzeugsitz vorgesehen, in welchem eine Klimatisierungskomponente zur Erzeugung eines ausgebbaren temperierten Luftstroms angeordnet ist. Hierbei ist die Klimatisierungskomponente des mindestens einen Fahrzeugsitzes über einen beweglichen Fluidanschluss, welcher zur Herstellung einer fluiddichten Verbindung als Gegenstück zu den Anschlussvorrichtungen des mindestens einen Fluidkanals ausgebildet ist, wahlweise an eine der Anschlussvorrichtungen des mindestens einen Fluidkanals ankoppelbar und abkoppelbar. Hierbei ist der Fluidanschluss zwischen einer Arbeitsposition, in welcher der Fluidanschluss in eine der Anschlussvorrichtungen eingeführt und fluiddicht mit dieser verbunden ist, und einer Ruheposition verstellbar, in welcher der Fluidanschluss in Richtung Fahrzeugsitz eingezogen ist.

Zudem wird ein Fahrzeug mit einer solchen Klimatisierungsanordnung vorgeschlagen. Hierbei ist der mindestens eine Fahrzeugsitz in Fahrzeuglängsrichtung zwischen mindestens zwei Positionen verschiebbar, wobei an den mindestens zwei Positionen jeweils eine Anschlussvorrichtung des mindestens einen Fluidkanals angeordnet ist, mit welcher die Klimatisierungskomponente des mindestens einen Fahrzeugsitzes über den Fluidanschluss fluiddicht verbindbar ist.

Dadurch stellen Ausführungsformen der erfindungsgemäßen Klimatisierungsanordnung an den einzelnen Fahrzeugsitzen eine sitzeigene Klimatisierungszone zur Verfügung, welche unabhängig von der aktuellen Position des Fahrzeugsitzes eine effiziente Anströmung und Temperierung des Insassen auf dem Fahrzeugsitz ermöglicht.

So kann der Fahrzeugsitz beispielsweise während einer fahrergesteuerten Betriebsweise des Fahrzeugs in einer ersten Position im Fahrzeuginnenraum angeordnet werden, in welcher der Fahrer bequem das Lenkrad und Bedienelemente im Bereich einer Instrumententafel bedienen kann. Hierbei ist die Klimatisierungskomponente über den Fluidanschluss mit einer ersten Anschlussvorrichtung fluiddicht verbunden, welche an der ersten Position des Fahrzeugsitzes am Fluidkanal angeordnet ist. Soll der Fahrzeugsitz für einen autonomen oder teilautonomen Fahrbetrieb in eine Komfortposition verschoben werden, dann wird zuerst der Fluidanschluss von der ersten Anschlussvorrichtung entkoppelt und dann der Fahrzeugsitz von der ersten Position in eine zweite Position (Komfortposition) im Fahrzeuginnenraum verschoben, an welcher eine zweite Anschlussvorrichtung am Fluidkanal angeordnet ist. Anschließend wird die Klimatisierungskomponente über den Fluidanschluss fluiddicht mit der zweiten Anschlussvorrichtung des Fluidkanals verbunden bzw. an den Fluidkanal angeschlossen.

In weiterer vorteilhafter Ausgestaltung der erfindungsgemäßen Klimatisierungsanordnung können die mindestens zwei Anschlussvorrichtungen jeweils ein Absperrventil aufweisen, welches bei einem eingeführten Fluidanschluss geöffnet ist und sonst geschlossen ist. Dadurch kann verhindert werden, dass ein im Fluidkanal geführtes Fluid in die korrespondierende Anschlussvorrichtung austritt, wenn diese nicht benutzt wird.

In weiterer vorteilhafter Ausgestaltung der erfindungsgemäßen Klimatisierungsanordnung kann der mindestens eine Fluidkanal im Unterflur des Fahrzeugs angeordnet werden. Dies ermöglicht eine einfache und unsichtbare Führung des Fluidkanals. Alternativ kann der mindestens eine längenverstellbare Luftkanal im Schwellerbereich oder im Mitteltunnel angeordnet werden.

In weiterer vorteilhafter Ausgestaltung der erfindungsgemäßen Klimatisierungsanordnung können die Anschlussvorrichtungen des mindestens einen Fluidkanals in Fahrzeuglängsrichtung verteilt an dem mindestens einem Fluidkanal angeordnet werden. Dadurch können für die einzelnen Fahrzeugsitze jeweils mehrere verschiedene Positionen vorgegeben werden, an welchen die Klimatisierungskomponente des jeweiligen Fahrzeugsitzes an den mindestens einen Fluidkanal angeschlossen werden kann.

In weiterer vorteilhafter Ausgestaltung der erfindungsgemäßen Klimatisierungsanordnung kann der mindestens eine Fluidkanal beispielsweise als Luftkanal und die Klimatisierungskomponente als Gebläse ausgeführt werden. Bei dieser Ausführungsform umfasst die Klimatisierungsanordnung ein zentrales Klimagerät. Hierzu kann das Klimagerät beispielsweise einen Heizkörper zum Erwärmen und Trocknen des Luftstroms und einen Verdampfer zum Kühlen des Luftstroms aufweisen, welchen das Gebläse im Fahrzeugsitz ansaugt und über entsprechende Luftausströmer zur Anströmung und Temperierung des Insassen auf dem Fahrzeugsitz ausgibt.

Alternativ kann der mindestens eine Fluidkanal als Kältemittelleitung und die Klimatisierungskomponente als Klimagerät ausgeführt werden. So kann ein solches dezentrales Klimagerät im Fahrzeugsitz einen Heizkörper zum Erwärmen und Trocknen des Luftstroms und einen Verdampfer zum Kühlen des Luftstroms sowie ein Gebläse zum Erzeugen des Luftstroms aufweisen. Hierbei wird der Verdampfer des Klimageräts über den Fluidanschluss mit der Kältemittelleitung verbunden. Durch die Verwendung von dezentralen Klimageräten in den einzelnen Fahrzeugsitzen kann auf ein zentrales Klimagerät im Bereich der Instrumententafel verzichtet werden.

In weiterer vorteilhafter Ausgestaltung der erfindungsgemäßen Klimatisierungsanordnung kann der Fluidanschluss des Klimageräts ein Absperrventil aufweisen, welches im eingeführten Zustand des Fluidanschlusses in die korrespondierende Anschlussvorrichtung geöffnet und sonst geschlossen ist. Dadurch kann verhindert werden, dass Kältemittel über den Fluidanschluss aus dem Verdampfer austritt, wenn diese nicht benutzt wird.

In weiterer vorteilhafter Ausgestaltung der erfindungsgemäßen Klimatisierungsanordnung können die eingesetzten Absperrventile jeweils durch Einführen des Fluidanschlusses in die korrespondierende Anschlussvorrichtung automatisch geöffnet und nach dem Entfernen des Fluidanschlusses automatisch wieder gesperrt werden. Alternativ können die Absperrventile jeweils nach dem Einführen des Fluidanschlusses in die korrespondierende Anschlussvorrichtung durch eine manuelle Betätigung geöffnet und vor dem Herausziehen des Fluidanschlusses aus der korrespondierenden Anschlussvorrichtung gesperrt werden.

Die für die erfindungsgemäße Klimatisierungsanordnung für ein Fahrzeug beschriebenen Vorteile und bevorzugten Ausführungsformen gelten auch für das erfindungsgemäße Fahrzeug.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen. Hierbei zeigen:
- Fig. 1: eine schematische ausschnittsweise Darstellung eines Fahrzeuginnenraums mit einem ersten Ausführungsbeispiels einer erfindungsgemäßen Klimatisierungsanordnung für ein Fahrzeug; und
- Fig. 2: eine schematische ausschnittsweise Darstellung eines Fahrzeuginnraums mit einem zweiten Ausführungsbeispiels einer erfindungsgemäßen Klimatisierungsanordnung für ein Fahrzeug.

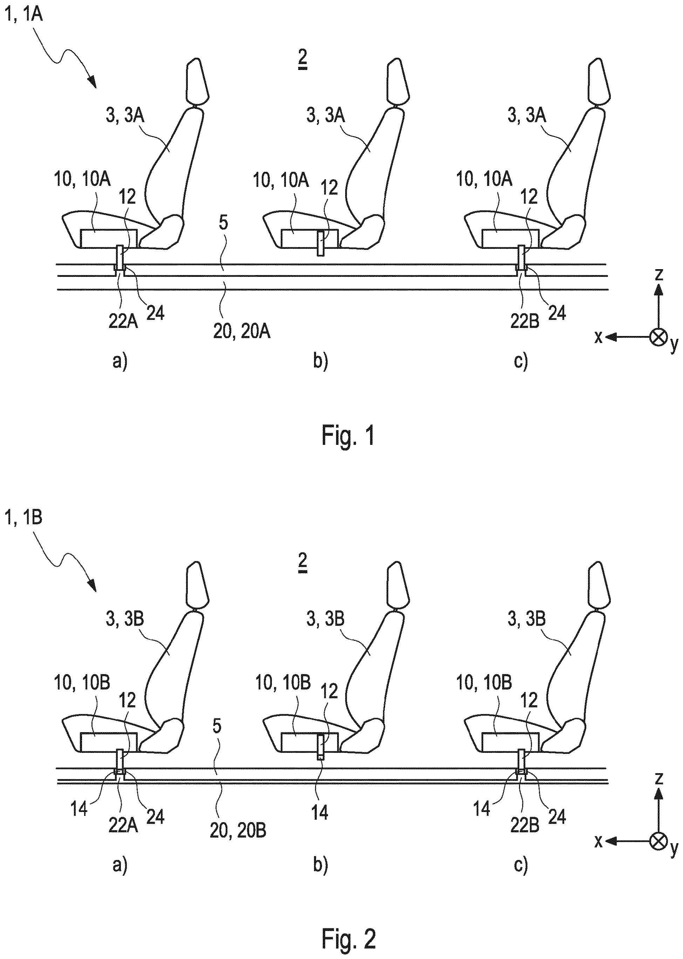

Wie aus Fig. 1 und 2 ersichtlich ist, weist die Klimatisierungsanordnung 1, 1A, 1B für ein Fahrzeug in den dargestellten Ausführungsbeispielen jeweils mindestens einen Fluidkanal 20, 20A, 20B welcher mindestens zwei baugleiche Anschlussvorrichtungen 22A, 22B aufweist, und mindestens einen verschiebbaren Fahrzeugsitz 3, 3A, 3B auf. Hierbei ist in dem mindestens einen Fahrzeugsitz 3, 3A, 3B eine Klimatisierungskomponente 10, 10A, 10B zur Erzeugung eines ausgebbaren temperierten Luftstroms angeordnet, wobei die Klimatisierungskomponente 10, 10A, 10B des mindestens einen Fahrzeugsitzes 3, 3A, 3B über einen beweglichen Fluidanschluss 12, welcher zur Herstellung einer fluiddichten Verbindung als Gegenstück zu den Anschlussvorrichtungen 22A, 22B des mindestens einen Fluidkanals 20, 20A, 20B ausgebildet ist, wahlweise an eine der Anschlussvorrichtungen 22A, 22B des mindestens einen Fluidkanals 20, 20A, 20B ankoppelbar und abkoppelbar ist.

Der Fluidanschluss 12 ist zwischen einer Arbeitsposition, in welcher der Fluidanschluss 12 in eine der Anschlussvorrichtungen 22A, 22B eingeführt und fluiddicht mit dieser verbunden ist, und einer Ruheposition verstellbar, in welcher der Fluidanschluss 12 in Richtung Fahrzeugsitz 3 eingezogen ist. In Fig. 1 und 2 ist die Arbeitsposition des Fluidanschlusses 12 jeweils in den Abschnitten a) und c) dargestellt. Die Ruheposition des Fluidanschlusses 12 ist in Fig. 1 und 2 jeweils im Abschnitt b) dargestellt.

Wie aus Fig. 1 und 2 weiter ersichtlich ist, weist der dargestellte Ausschnitt des Fahrzeuginnenraums 2 beispielhaft jeweils einen im Unterflur 5 des Fahrzeugs angeordneten Fluidkanal 20, 20A, 20B mit zwei Anschlussvorrichtungen 22A, 22B auf, welche in Fahrzeuglängsrichtung x beabstandet zueinander angeordnet sind. Zudem zeigen Fig. 1 und 2 jeweils drei Fahrzeugsitze 3, 3A, 3A. Hierbei ist ein in einem ersten Abschnitt a) dargestellter Fahrzeugsitz 3, 3A, 3B an einer ersten Position im Fahrzeuginnenraum 2 angeordnet. Hierbei befindet sich der Fluidanschluss 12 der Klimatisierungskomponente 10, 10A, 10B in seiner Arbeitsstellung und verbindet die Klimatisierungskomponente 10, 10A, 10B über die erste Anschlussvorrichtung 22A fluiddicht mit dem Fluidkanal 20, 20A, 20B. Ein in einem zweiten Abschnitt c) dargestellter Fahrzeugsitz 3, 3A, 3B ist an einer zweiten Position im Fahrzeuginnenraum 2 angeordnet. Hierbei befindet sich der Fluidanschluss 12 der Klimatisierungskomponente 10, 10A, 10B ebenfalls in seiner Arbeitsstellung und verbindet die Klimatisierungskomponente 10, 10A, 10B über die zweite Anschlussvorrichtung 22B fluiddicht mit dem Fluidkanal 20, 20A, 20B. Ein in einem Zwischenabschnitt b) dargestellter Fahrzeugsitz 3, 3A, 3B ist zwischen der ersten und zweiten Position im Fahrzeuginnenraum 2 angeordnet. Das bedeutet, dass der dargestellte Fahrzeugsitz 3, 3A, 3B beispielsweise in nicht näher dargestellten Führungsschienen zwischen der ersten und zweiten Position verschoben wird. Daher ist dessen Klimatisierungskomponente 10, 10A, 10B vom Fluidkanal 20, 20A, 20B getrennt und der Fluidanschluss 12 der Klimatisierungskomponente 10, 10A, 10B ist in seine Ruheposition eingezogen.

In dem in Fig. 1 dargestellten ersten Ausführungsbeispiel der Klimatisierungsanordnung 1A für ein Fahrzeug ist der mindestens eine Fluidkanal 20 als Luftkanal 20A ausgebildet, welcher an einem Ende mit einem nicht dargestellten zentralen Klimagerät verbunden ist. Das zentrale Klimagerät umfasst einen Heizkörper zum Erwärmen und Trocknen des Luftstroms und einen Verdampfer zum Kühlen des Luftstroms. Hierbei ist die Klimatisierungskomponente 10 als Gebläse 10A ausgeführt, welches den Luftstrom aus dem Luftkanal 20A ansaugt und über entsprechende Luftausströmer zur Anströmung und Temperierung des Insassen auf dem Fahrzeugsitz 3A ausgibt.

Wie aus Fig. 1 weiter ersichtlich ist, weisen die beiden dargestellten Anschlussvorrichtungen 22A, 22B jeweils ein Absperrventil 24 auf, welches bei einem eingeführten Fluidanschluss 12 geöffnet und sonst geschlossen ist. Dadurch kann verhindert werden, dass temperierte Luft über die Anschlussvorrichtungen 22A, 22B aus dem Luftkanal austritt, wenn die Anschlussvorrichtungen 22A, 22B nicht benutzt werden.

In dem in Fig. 2 dargestellten zweiten Ausführungsbeispiel der Klimatisierungsanordnung 1B für ein Fahrzeug ist der mindestens eine Fluidkanal 20 als Kältemittelleitung 20B ausgeführt. Hierbei ist die Klimatisierungskomponente 10 als Klimagerät 10B ausgeführt. Das dezentrale Klimagerät 10B im Fahrzeugsitz 3B umfasst einen nicht dargestellten Heizkörper zum Erwärmen und Trocknen des Luftstroms und einen nicht dargestellten Verdampfer zum Kühlen des Luftstroms sowie ein Gebläse zum Erzeugen des Luftstroms. Zudem kann der Verdampfer des Klimageräts 10B über den Fluidanschluss 12 und die Anschlussvorrichtungen 22A, 22B fluiddicht mit der Kältemittelleitung 20B verbunden werden.

Wie aus Fig. 2 weiter ersichtlich ist, weisen die beiden dargestellten Anschlussvorrichtungen 22A, 22B und die dargestellten Fluidanschlüsse 12 jeweils ein Absperrventil 14, 24 auf, welche bei einem eingeführten Fluidanschluss 12 geöffnet und sonst geschlossen sind. Durch die in den Anschlussvorrichtungen 22A, 22B angeordneten Absperrventile 24 kann verhindert werden, dass Kältemittel über die Anschlussvorrichtungen 22A, 22B aus der Kältemittelleitung 20B austritt, wenn diese nicht benutzt werden. Durch das im Fluidanschluss 12 angeordnete Absperrventil 14 kann verhindert werden, dass Kältemittel über den Fluidanschluss 12 aus dem Verdampfer austritt, wenn dieser nicht benutzt wird.

In den dargestellten Ausführungsbeispielen der Klimatisierungsanordnung 1, 1A, 1B sind die Absperrventile 14, 24 jeweils so ausgeführt, dass die Absperrventile 14, 24 durch Einführen des Fluidanschlusses 12 in die korrespondierende Anschlussvorrichtung 22A, 22B automatisch geöffnet und beim Herausziehen des Fluidanschlusses 12 aus der korrespondierenden Anschlussvorrichtung 22A, 22B automatisch gesperrt werden. Bei einem alternativen nicht dargestellten Ausführungsbeispiel werden die Absperrventile 14, 24 jeweils nach dem Einführen des Fluidanschlusses 12 in die korrespondierende Anschlussvorrichtung 22A, 22B durch eine manuelle Betätigung geöffnet und vor dem Herausziehen des Fluidanschlusses 12 aus der korrespondierenden Anschlussvorrichtung 22A, 22B durch eine manuelle Betätigung gesperrt.

Wie aus Fig. 1 und 2 weiter ersichtlich ist, ist bei einem erfindungsgemäßen Fahrzeug mit einer solchen Klimatisierungsanordnung 1, 1A, 1B der mindestens eine Fahrzeugsitz 3, 3A, 3B in Fahrzeuglängsrichtung x zwischen mindestens zwei Positionen verschiebbar. Hierbei ist an den mindestens zwei Positionen jeweils eine Anschlussvorrichtung 22A, 22B des mindestens einen Fluidkanals 20 angeordnet, mit welcher die Klimatisierungskomponente 10 des mindestens einen Fahrzeugsitzes 3, 3A, 3B über den Fluidanschluss 12 fluiddicht verbunden werden kann.

### BEZUGSZEICHENLISTE

- 1, 1A, 1B: Klimatisierungsvorrichtung für ein Fahrzeug
- 2: Fahrzeuginnenraum
- 3, 3A, 3B: Fahrzeugsitz
- 5: Unterflur
- 10: Klimatisierungskomponente
- 10A: Gebläse
- 10B: Klimagerät
- 12: Fluidanschluss
- 14: Absperrventil
- 20: Fluidkanal
- 20A: Luftkanal
- 20B: Kältemittelleitung
- 22A, 22B: Anschlussvorrichtung
- 24: Absperrventil
- a), b), c): Fahrzeugsitzposition
- x: Fahrzeuglängsrichtung
- y: Fahrzeugquerrichtung
- z: Fahrzeughochrichtung

## Patentansprüche

1. Klimatisierungsanordnung (1) für ein Fahrzeug, mit mindestens einem Fluidkanal (20), welcher mindestens zwei baugleiche Anschlussvorrichtungen (22A, 22B) aufweist, und mindestens einem verschiebbaren Fahrzeugsitz (3), wobei in dem mindestens einen Fahrzeugsitz (3) eine Klimatisierungskomponente (10) zur Erzeugung eines ausgebbaren temperierten Luftstroms angeordnet ist, wobei die Klimatisierungskomponente (10) des mindestens einen Fahrzeugsitzes (3) über einen beweglichen Fluidanschluss (12), welcher zur Herstellung einer fluiddichten Verbindung als Gegenstück zu den Anschlussvorrichtungen (22A, 22B) des mindestens einen Fluidkanals (20) ausgebildet ist, wahlweise an eine der Anschlussvorrichtungen (22A, 22B) des mindestens einen Fluidkanals (20) ankoppelbar und abkoppelbar ist,
**dadurch gekennzeichnet, dass**
der Fluidanschluss (12) zwischen einer Arbeitsposition, in welcher der Fluidanschluss (12) in eine der Anschlussvorrichtungen (22A, 22B) eingeführt und fluiddicht mit dieser verbunden ist, und einer Ruheposition verstellbar ist, in welcher der Fluidanschluss (12) in Richtung Fahrzeugsitz (3) eingezogen ist.

2. Klimatisierungsanordnung (1) nach Anspruch 1,
**dadurch gekennzeichnet, dass**
die mindestens zwei Anschlussvorrichtungen (22A, 22B) jeweils ein Absperrventil (24) aufweisen, welches bei einem eingeführten Fluidanschluss (12) geöffnet ist und sonst geschlossen ist.

3. Klimatisierungsanordnung (1) nach Anspruch 1 oder 2,
**dadurch gekennzeichnet, dass**
der mindestens eine Fluidkanal (20) im Unterflur (5) des Fahrzeugs angeordnet ist.

4. Klimatisierungsanordnung (1) nach einem der Ansprüche 1 bis 3,
**dadurch gekennzeichnet, dass**
die Anschlussvorrichtungen (22A, 22B) des mindestens einen Fluidkanals (20) in Fahrzeuglängsrichtung (x) verteilt an dem mindestens einen Fluidkanal (20) angeordnet sind.

5. Klimatisierungsanordnung (1, 1A) nach einem der Ansprüche 1 bis 4,
**dadurch gekennzeichnet, dass**
der mindestens eine Fluidkanal (20) als Luftkanal (20A) und die Klimatisierungskomponente (10) als Gebläse (10A) ausgeführt ist.

6. Klimatisierungsanordnung (1, 1B) nach einem der Ansprüche 1 bis 4,
**dadurch gekennzeichnet, dass**
der mindestens eine Fluidkanal (20) als Kältemittelleitung (20B) und die Klimatisierungskomponente (10) als Klimagerät (10B) ausgeführt ist.

7. Klimatisierungsanordnung (1, 1B) nach Anspruch 6,
**dadurch gekennzeichnet, dass**
der Fluidanschluss (12) des Klimageräts (10B) ein Absperrventil (14) aufweist, welches im eingeführten Zustand des Fluidanschlusses (12) in die korrespondierende Anschlussvorrichtung (22A, 22B) geöffnet und sonst geschlossen ist.

8. Klimatisierungsanordnung (1) nach Anspruch 2 oder 7,
**dadurch gekennzeichnet, dass**
das jeweilige Absperrventil (14, 24) durch Einführen des Fluidanschlusses (12) in die korrespondierende Anschlussvorrichtung (22A, 22B) automatisch oder nach dem Einführen des Fluidanschlusses (12) in die korrespondierende Anschlussvorrichtung (22A, 22B) durch eine manuelle Betätigung geöffnet wird, wobei das jeweilige Absperrventil (14, 24) beim Herausziehen des Fluidanschlusses (12) aus der korrespondierenden Anschlussvorrichtung (22A, 22B) automatisch oder vor dem Herausziehen des Fluidanschlusses (12) aus der korrespondierenden Anschlussvorrichtung (22A, 22B) durch eine manuelle Betätigung gesperrt wird.

9. Fahrzeug mit einer Klimatisierungsanordnung (1), welche nach einem der Ansprüche 1 bis 8 ausgeführt ist, wobei der mindestens eine Fahrzeugsitz (3) in Fahrzeuglängsrichtung (x) zwischen mindestens zwei Positionen verschiebbar ist, wobei an den mindestens zwei Positionen jeweils eine Anschlussvorrichtung (22A, 22B) des mindestens einen Fluidkanals (20) angeordnet ist, mit welcher die Klimatisierungskomponente (10) des mindestens einen Fahrzeugsitzes (3) über den Fluidanschluss (12) fluiddicht verbindbar ist.

## Claims

1. Air-conditioning arrangement (1) for a vehicle, having at least one fluid channel (20) which has at least two identically designed connection devices (22A, 22B), and having at least one movable vehicle seat (3), wherein an air-conditioning component (10) for producing a temperature-controlled airflow that can be output is arranged in the at least one vehicle seat (3), wherein the air-conditioning component (10) of the at least one vehicle seat (3) can be optionally coupled to and uncoupled from one of the connection devices (22A, 22B) of the at least one fluid channel (20) via a movable fluid connection (12) which, in order to establish a fluid-tight connection, is designed as a counterpart to the connection devices (22A, 22B) of the at least one fluid channel (20).
**characterised in that**
the fluid connection (12) is adjustable between a working position in which the fluid connection (12) is inserted into and fluid-tightly connected to one of the connection devices (22A, 22B), and an idle position in which the fluid connection (12) is retracted in the direction towards the vehicle seat (3).

2. Air-conditioning arrangement (1) according to claim 1,
**characterised in that**
the at least two connection devices (22A, 22B) each have a shut-off valve (24) which is opened when a fluid connection (12) is inserted and is otherwise closed.

3. Air-conditioning arrangement (1) according to claim 1 or 2,
**characterised in that**
the at least one fluid channel (20) is arranged in an underfloor (5) of the vehicle.

4. Air-conditioning arrangement (1) according to any of claims 1 to 3,
**characterised in that**
the connection devices (22A, 22B) of the at least one fluid channel (20) are arranged so as to be distributed in the vehicle longitudinal direction (x) on the at least one fluid channel (20).

5. Air-conditioning arrangement (1, 1A) according to any of claims 1 to 4,
**characterised in that**
the at least one fluid channel (20) is designed as an air channel (20A) and the air-conditioning component (10) is designed as a fan (10A).

6. Air-conditioning arrangement (1, 1B) according to any of claims 1 to 4,
**characterised in that**
the at least one fluid channel (20) is designed as a refrigerant line (20B) and the air-conditioning component (10) is designed as an air conditioner (10B).

7. Air-conditioning arrangement (1, 1B) according to claim 6,
**characterised in that**
the fluid connection (12) of the air conditioner (10B) has a shut-off valve (14) which is opened when the fluid connection (12) is inserted into the corresponding connection device (22A, 22B) and is otherwise closed.

8. Air-conditioning arrangement (1) according to claim 2 or 7,
**characterised in that**
the respective shut-off valve (14, 24) is opened automatically by inserting the fluid connection (12) into the corresponding connection device (22A, 22B) or by a manual actuation after the fluid connection (12) has been inserted into the corresponding connection device (22A, 22B), wherein the respective shut-off valve (14, 24) is closed automatically when the fluid connection (12) is withdrawn from the corresponding connection device (22A, 22B) or before the fluid connection (12) is withdrawn from the corresponding connection device (22A, 22B) by a manual actuation.

9. Vehicle having an air-conditioning arrangement (1) which is designed according to any of claims 1 to 8, wherein the at least one vehicle seat (3) is movable in the vehicle longitudinal direction (x) between at least two positions, wherein at each of the at least two positions a connection device (22A, 22B) of the at least one fluid channel (20) is arranged, to which connection device the air-conditioning component (10) of the at least one vehicle seat (3) is connectable by means of the fluid connection (12) in a fluid-tight manner.

## Revendications

1. Agencement de climatisation (1) pour un véhicule, avec au moins un canal de fluide (20), lequel présente au moins deux dispositifs de raccordement de construction identique (22A, 22B), et au moins un siège de véhicule déplaçable (3), dans lequel dans l'au moins un siège de véhicule (3), un composant de climatisation (10) est disposé pour générer un flux d'air climatisé pouvant être évacué, dans lequel le composant de climatisation (10) de l'au moins un siège de véhicule (3) peut être couplé et découplé par l'intermédiaire d'un raccord fluidique mobile (12), lequel est conçu pour réaliser une connexion étanche aux fluides en contrepartie des dispositifs de raccordement (22A, 22B) de l'au moins un canal de fluide (20), au choix à l'un des dispositifs de raccordement (22A, 22B) de l'au moins un canal de fluide (20),
**caractérisé en ce**
**que** le raccord fluidique (12) est réglable entre une position de travail, dans laquelle le raccord fluidique (12) est introduit dans un des dispositifs de raccordement (22A, 22B) et connecté à celui-ci de manière étanche aux fluides, et une position de repos, dans laquelle le raccord fluidique (12) est rentré en direction du siège de véhicule (3).

2. Agencement de climatisation (1) selon la revendication 1,
**caractérisé en ce**
**que** les au moins deux dispositifs de raccordement (22A, 22B) présentent respectivement un robinet d'isolement (24), lequel est ouvert lors de l'introduction d'un raccord fluidique (12) et est autrement fermé.

3. Agencement de climatisation (1) selon la revendication 1 ou 2,
**caractérisé en ce**
**que** l'au moins un canal de fluide (20) est disposé dans le sous-plancher (5) du véhicule.

4. Agencement de climatisation (1) selon l'une quelconque des revendications 1 à 3,
**caractérisé en ce**
**que** les dispositifs de raccordement (22A, 22B) de l'au moins un canal de fluide (20) sont distribués sur l'au moins un canal de fluide (20) dans la direction longitudinale (x) du véhicule.

5. Agencement de climatisation (1, 1A) selon l'une quelconque des revendications 1 à 4,
**caractérisé en ce**
**que** l'au moins un canal de fluide (20) est réalisé en tant que canal d'air (20A) et le composant de climatisation (10) est réalisé en tant que ventilateur (10A).

6. Agencement de climatisation (1, 1B) selon l'une quelconque des revendications 1 à 4,
**caractérisé en ce**
**que** l'au moins un canal de fluide (20) est réalisé en tant que conduite de réfrigérant (20B) et le composant de climatisation (10) est réalisé en tant que climatiseur (10B).

7. Agencement de climatisation (1, 1B) selon la revendication 6,
caractérisé en ce
le raccord fluidique (12) du climatiseur (10B) présente un robinet d'isolement (14), lequel est ouvert à l'état inséré du raccord fluidique (12) dans le dispositif de raccordement correspondant (22A, 22B) et est autrement fermé.

8. Agencement de climatisation (1) selon la revendication 2 ou 7,
**caractérisé en ce**
**que** le robinet d'isolement respectif (14, 24) est ouvert automatiquement par l'insertion du raccord hydraulique (12) dans le dispositif de raccordement correspondant (22A, 22B) ou par un actionnement manuel après l'insertion du raccord fluidique (12) dans le dispositif de raccordement correspondant (22A, 22B), dans lequel le robinet d'isolement respectif (14, 24) est verrouillé automatiquement lors de l'extraction du raccord fluidique (12) du dispositif de raccordement correspondant (22A, 22B) ou par actionnement manuel avant l'extraction du raccord fluidique (12) du dispositif de raccordement correspondant (22A, 22B).

9. Véhicule avec un agencement de climatisation (1), lequel est réalisé selon l'une quelconque des revendications 1 à 8, dans lequel l'au moins un siège de véhicule (3) peut être déplacé entre au moins deux positions dans la direction longitudinale (x) du véhicule, dans lequel un dispositif de raccordement (22A, 22B) de l'au moins un canal de fluide (20) est disposé, avec lequel le composant de climatisation (10) de l'au moins un siège de véhicule (3) peut être connecté de manière étanche aux fluides par l'intermédiaire du raccord fluidique (12).
